# EUROPÄISCHE PATENTSCHRIFT

(11) **EP 0 594 800 B1**
(45) Veröffentlichungstag und Bekanntmachung des Hinweises auf die Patenterteilung: **02.11.1995**
(21) Anmeldenummer: 93906525.6
(22) Anmeldetag: 15.03.1993
(51) Int. Cl.: C02F 1/00, B01D 21/24

(54) **VORRICHTUNG ZUR ENTNAHME VON GEKLÄRTEM ABWASSER AUS RUNDBECKEN**
DEVICE FOR REMOVING PURIFIED WATER FROM CIRCULAR SETTLING TANKS
DISPOSITIF POUR PRELEVER DES EAUX USEES CLARIFIEES DANS DES BASSINS CIRCULAIRES DE SEDIMENTATION

(30) Priorität: 09.04.1992 DE 9204960 U; 20.07.1992 DE 4223863
(43) Veröffentlichungstag der Anmeldung: 04.05.1994
(60) Teilanmeldung: 95105925.2
(73) Patentinhaber: Hans Huber GmbH& Co. KG, D-92334 Berching (DE)
(72) Erfinder: VALENTIN, Franz, D-8000 München 2 (DE)
(74) Vertreter: Lewald, Dietrich, Dipl.-Ing.
(86) Internationale Anmeldenummer: EP9300587
(87) Internationale Veröffentlichungsnummer: WO9321111

(56) Entgegenhaltungen:
- CH-A- 229 433
- DE-A- 4 028 148
- US-A- 3 447 688
- US-A- 4 994 179

## Beschreibung

Die Erfindung betrifft eine Vorrichtung zur über den Beckenumfang gleichmäßig verteilten Entnahme von geklärtem Abwasser aus Rundbecken, die über eine zentrische Einleitung des Abwassers verfügt, mit einem unterhalb der Wasseroberfläche angeordneten Tauchrohr, das mit Öffnungen versehen ist.

Viele Klärbecken verwenden eine kreisrunde Rinne am Beckenrand als Ablauf. Im Freispiegel fließt Klarwasser über eine gerade oder gezackte Zahnschwelle. Die Entnahmemenge nimmt mit dem Überstauungsgrad zu. Das kreisrunde Klärbecken funktioniert nur dann optimal, wenn die Quellströmung aus dem Mittelbauwerk in alle Richtungen gleichmäßig verteilt abfließen kann.

Dieser Ablauf wird ungünstig durch Algenwachstum im Bereich der Zahnschwelle einerseits beeinflußt. Andererseits verändern schon kleine Strömungen der Wasseroberfläche, wie z.B. Wind, die Symmetrie. Im ungünstigsten Fall bleibt damit etwa der halbe Rinnenumfang ungenützt (völlig unterschiedliche Windverhältnisse auf der Lee, verglichen mit der Luvseite. Dies bedeutet, daß über den restlichen Teil die doppelte Menge abströmt, während sich an der Leeseite die Absetzleistung verringert. Schwimmschlamm wird verstärkt mitgerissen, der Betreiber wird mit höhren Abgaben belastet. Weitere Schwierigkeiten sind darin zu sehen, daß aus den oben genannten Gründen die Zahnschwellenmontage ein aufwendiges Ausnivellieren erfordert. Zudem ist das Wasserniveau nicht getrennt von der Ablaufmenge regelbar. Neben einem hohen Reinigungsaufwand der Rinnen ist mit einer hohen Ablaufbelastung mit Feststoffen zu rechnen.

Der Erfindung liegt demgegenüber die Aufgabe zugrunde, die Ablaufmenge zu vergleichmäßigen, und den Wasserstand im Rundbecken unabhängig vom Abzug des geklärten Abwassers zu machen.

Gelöst wird diese Aufgabe überraschend dadurch, daß das Tauchrohr als zur Vertikalachse des Rundbeckens konzentrisch angeordnete geschlossene Ringleitung ausgebildet ist, deren Zulauföffnungen als Schlitze ausgebildet sind, wobei die Größe der einzelnen Schlitze unterschiedlich ist.

Es wird also von unterhalb der Oberfläche des geklärten Abwassers eine gleichmäßige regelbare Menge zum Ablauf gebracht.

Der Ablauf kann mengengesteuert sein.

Im allgemeinen wird man die Mengensteuerung durch Veränderung des Höhenunterschiedes zwischen dem Wasserstand im Becken und dem Wasserstand im Ablauf vornehmen.

Vorzugsweise ist das Tauchrohr als Ringleitung mit Durchbrechungen gleichen Abstandes voneinander ausgebildet.

Günstig ist es, wenn man die Ringleitung mit einem außerhalb des Rundbeckens angeordneten Ablaufschacht über eine Austrittssammelleitung verbindet.

Zweckmäßig ist eine höhenverstellbare Ablaufeinrichtung zum Ablaufschacht hin angeordnet.

Im allgemeinen wird man die Ringleitung äquidistant zum zentrischen Zulauf anordnen.

Bei richtiger Dimensionierung der Rohröffnungen und -durchmesser genügt gegebenenfalls eine einzige Ablaufleitung durch die Beckenwand. Diese führt zu einer Überlaufschwelle, welche unabhängig vom Wasserspiegel geregelt wird. Die Ablaufeinrichtung selbst kann eine Regulierschwelle sein.

Die Mengensteuerung kann durch Veränderung des Höhenunterschiedes zwischen dem Wasserstand im Becken und dem Wasserstand im Ablauf vorgenommen werden.

Durch die Maßnahme nach der Erfindung kann der Wasserstand im Becken auf variable Höhe gefahren werden.

Der Rohrinnendruck der Rohrleitung am Rohrumfang kann so hoch festgelegt werden, daß am Rohrende noch ein Abfluß unter Druck gewährleistet ist. Die Ablaufgeschwindigkeit am Austritt aus der Rohrleitung kann maximal, deren Austritt diametral gegenüber jenem Austritt nahe Null sein.

Die Überstauung über dem Tauchrohr kann unabhängig von der Abflußmenge regelbar gefahren werden.

In Weiterbildung nach der Erfindung kann das Rundbecken auch als Pufferbecken verwendbar sein.

Eine Pumpe ist nicht vorgesehen.

Die Höhendifferenz ist für das Gefälle und auch für die Geschwindigkeit verantwortlich.

Durch Reben und Senken der Ablaufeinrichtung kann die Regelung, automatisch, falls gewünscht, erfolgen.

Der Auslauf mit Tauchrohren kann bevorzugt zusammen mit einem Zulauf mit der sog. Coanda-Tulpe (deutsches Gebrauchsmuster G 91 12 947.8 eingetragen am 30.1.1992) betrieben werden.

Durch die Maßnahme nach der Erfindung wird die Betriebssicherheit erhöht, der Wartungsbedarf verringert, die Feststoffabscheidung verbessert, genauso wie der Reinigungsgrad. Die Abwasserabgaben werden gesenkt.

Durch die Anordnung eines Tauchrohres im Abstand unterhalb des Freispiegels, wo schon stabile Verhältnisse herrschen, schützt das geschlossene Rohr das Entnahmewasser vor Licht und verhindert dadurch die Fotosynthese. Die Ablaufmenge wird unabhängig von der Überstauung.

Die Vorteile der genauen Regelung und des erhöhten Ablaufs werden durch den Betrieb der Sammelleitung als gefülltes Rohr gewährleistet. Die Austrittssammelleitung führt zentral durch die Beckenaußenwand zu der Überfallschwelle, wo eine separate Regelung erfolgt. Eine Anpassung an den gewünschten Betriebszustand ist möglich. Aufgrund des geschlossenen Rohrsystems kann die Ablaufmenge getrennt eingestellt werden. Unabhängig von der Größe der Öffnungen ist die maximale Abflußmenge genau berechenbar. Statisch erfolgt die Abstützung auf Konsolen.

Bedarfsweise wird eine höhenverstellbare Tauchwand direkt am Tauchrohr angebracht.

Die als Sammelleitung ausgebildete Rohrleitung wird diskontinuierlich beaufschlagt.

Bei hohem Aufstau wird die notwendige Ungleichförmigkeit des Zuflusses längs des Rohres bei gleichem Rohrdurchmesser äußerst gering.

Für große Abflußmengen ist es denkbar, den Rohrdurchmesser stufenweise dem zugehörigen Durchfluß anzupassen.

Bei der Berechnung der Anlage sind Verluste wie Rohrreibung, gegebenenfalls Stoßverluste, Druckhöhenverluste, Beschleunigungsverluste infolge der Zuströmung senkrecht zur Fließrichting im Rohr zu berücksichtigen. Bestehende Anlagen können durch nachträglichen Einbau der Maßnahme nach der Erfindung saniert werden..

Vorzugsweise ist es möglich, zur weiteren Verbesserung die Gleichförmigkeit des Abzugs, das Tauchrohr gestuft zunehmenden Durchmessern gegen den Auslauf aus dem Becken abzustufen. Die Geschwindigkeit wird auf eine mittlere Geschwindigkeit von 0,3 m/sec. am Ende der Rohrleitung begrenzt, die Durchmesser werden insgesamt verringert, da nicht mehr mit einem durchgehend großen Durchmesser gefahren werden muß. Der Übergang kann auch allmählich durch praktisch kontinuierliche Durchmesserzunahme vorgenommen werden.

Nach einer anderen Ausführungsform ist es möglich, um gleichförmige Strömung und eine Verhinderung der Überschreitung der Maximalgeschwindigkeit zu erreichen, die Schlitze gegen den Ablauf hin kleiner werden zu lassen.

Eine besonders günstige Kombination ergibt die Aufweitung des Rohres gegen den Ablauf hin bei gleichzeitiger Verminderung der Schlitzlänge. Dies hat den weiteren Vorteil, daß in jedem Rohrabschnitt die Geschwindigkeit von 0,3 m/sec. erreicht wird, was ohne die Abstufung nur am Rohrende der Fall wäre. Das etwaige Ausfallen eingetragener Schlammflocken wegen der dann kleiner Schleppspannungen wird vermieden.
Durch die Verbindung zwischen veränderter Schlitzlänge und abgestuften Rohrdurchmessern wird noch einmal eine Verbesserung in die Gleichförmigkeit der Anströmung erreicht.

Es wird nicht verkannt, daß Klärbecken mit Rohren mit kreisförmigen Öffnungen bekannt sind (SU-PS 13 67 998 A1), wobei aus einem Klärbecken Wasser in unterschiedlichen Tiefen dadurch abgezogen wird, daß ein Verschlußorgan an dem jeweiligen Rohr geöffnet wird. Eine Lösung für die hier anstehende Aufgabe ist dieser Schrift nicht zu entnehmen.

Weiterhin ist bekannt (CH-PS 79062) ein mechanisch über einen Unterdruck gesteuerter Entleerungshahn für den Ausfluß einer dichte geschichteten Flüssigkeit aus einem Behälter. Der Hahn hat kreisförmige Öffnungen, weitere Gemeinsamkeiten sind nicht gegeben.

Schließlich ist bekannt (US-PS 30 17 998) eine Vorrichtung zum Abscheiden einer festen Phase aus einer Flüssigkeit. Der Einlauf zum Absetztank stellt eine Verteilerrinne mit rechteckigem Querschnitt und kreisförmigen Bodenöffnungen dar. Bei kleinen und üblichen Zuflüssen erfolgt der Zulauf über die Bodenöffnungen, bei größeren Zuflüssen über den Überfall am Rinnenrand. Es handelt sich nicht um eine Vorrichtung zur gleichmäßigen Entnahme von geklärtem Abwasser aus gegebenenfalls sehr großen Rundbecken und schon gar nicht ein vollständig gefülltes Tauchrohr, wo lediglich eine Druckdifferenz zwischen dem Rohrinnendruck und dem Rohraußendruck genügt.

Ferner ist noch bekannt (CH-PS 229 433), eine an der Klärbeckenwand angeordnete angenähert horizontale Leitung vorzusehen, die mit einem horizontal unter dem Wasserspiegel liegenden Schlitz mit dem Klärbecken in Verbindung steht. Der Schlitz geht über die gesamte Leitungslänge durch. Von einer geschlossenen Leitung kann nicht die Rede sein. Der Zufluß zur Leitung wird hier allein über das außerhalb des Klärbeckens liegende Mündungsstrück gesteuert.

Hierin sind keinerlei Maßnahmen gemeinsam mit denen der Erfindung zu sehen. Der durchgehende Schlitz verhindert vielmehr eine gleichmäßige Zuströmung aus dem Becken in die Leitung.

Eine andere Lösung für die gleiche Aufgabe geht aus von einer Vorrichtung zur über den Beckenumfang gleichmäßig verteilten Entnahme von geklärtem Abwasser aus Rundbecken, die über eine zentrische Einleitung des Abwassers verfügt, mit einem mit Durchbrechungen versehenen Rohr. Diese zeichnet sich dadurch aus, daß das Tauchrohr als zur Vertikalachse des Rundbeckens konzentrisch angeordnete geschlossene Ringleitung ausgebildet ist und von einer Ausbildung derart ist, daß die Strömungsgeschwindigkeit über die Erstreckung des Tauchrohres bis zum Austritt aus dem Tauchrohr im wesentlichen konstant gehalten wird.

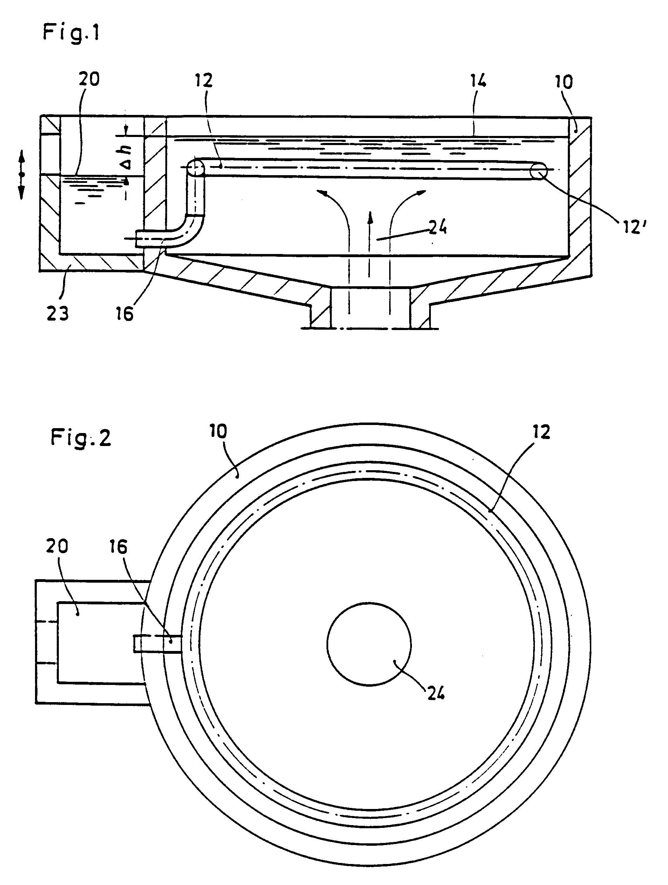

Beispielsweise Ausführungsformen der Erfindung sollen nun anhand der beiliegenden Zeichnungen näher erläutert werden. Diese zeigen in
Fig. 1 die Ausführungsform eines Tauchrohres innerhalb eines Rundbeckens;
Fig. 2 ist eine Draufsicht auf Fig. 1;
Fig. 3 zeigt eine Einzelheit eines Auslaufs;
Fig. 4 und Fig. 5 zeigen eine besondere Ausführungsform des Tauchrohrs mit dem Ziel, gleichförmige nicht zu große Strömungsgeschwindigkeiten zu erhalten.

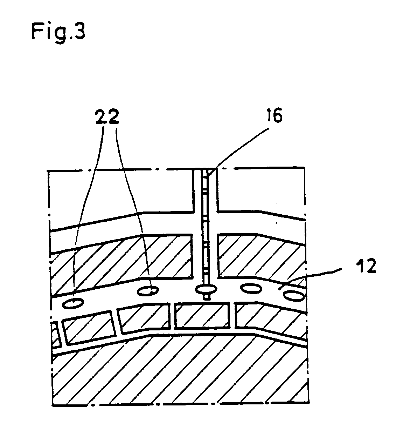

In einem Rundbecken 10, im allgemeinen aus Beton, ist äquidistant vom Beckenrand eine Sammelleitung 12 angeordnet, und zwar im getauchten Zustand im Abstand unterhalb des Freispiegels 14. Bei 24 befindet sich ein definierter Einlauf mit Steuerung der Umlenkung, was hier nicht näher ausgeführt ist. An dieser Stelle kann ein Mittelbauwerk mit einer sog. Coanda-Tulpe sitzen. Das Wasser strömt also über den Einlauf 24 zu. Das geklärte Wasser wird definiert über eine Ringleitung 12 abgezogen, die, wie Fig. 3 zeigt, unter gleichem Abstand Schlitze 22 aufweist. Diese Schlitze können Mindesbreiten von 10 mm haben. Von der Austrittssammelleitung strömt das geklärte Abwasser in die Austrittsleitung 16, und zwar wird im Bereich des Übertritts aus der Sammelleitung 12 in die Austrittsleitung 16 das Wasser die maximale Strömungsgeschwindigkeit, am gegenüberliegenden Ende 12' eine Geschwindigkeit von praktisch Null, haben. Nach dem Austritt aus der Austrittsleitung 16 tritt das Wasser in eine Einrichtung mit Regulierschwelle 23 ein. Da diese Regulierschwelle, wie durch den Doppelpfeil angedeutet, heb- und senkbar ist, ist der Einlauf unabhängig vom Ablauf und die Flüssigkeitsstandhöhe im Rundbecken unabhängig vom Austritt regelbar. Sammelleitung 12 und Austrittsleitung 16 sind immer voll gefüllt. Aus der Regulierschwelle strömt das Wasser in einen nicht dargestellten Ablaufschacht. Es ist auch möglich, die Höhenverstellbarkeit der Regulierschwelle 23 zu automatisieren. Immer ist die (Druck)höhendifferenz verantwortlich für das Gefälle und die Geschwindigkeit.

Nach einer anderen Ausführungsform ist es auch möglich, die Austrittsleitung 16 nach oben zu führen und etwa über einen V-Querschnitt das Wasser definiert austreten zu lassen. In diesem Fall wäre dann das Rohr selbst in gewissen Grenzen heb- und senkbar ausgebildet bzw. eine ihm zugeordnete Einrichtung wäre es.

Bei der Steuerung der Druckhöhendifferenz zwischen dem Freispiegel 14 und dem Flüssigkeitsstand 20 in der Regulierschwelle 23 sind noch Rohrreibungsverluste, Verluste durch Flüssigkeitsreibung, Beschleunigungsverluste beim Eintritt der Flüssigkeit in die verschiedenen Schlitze der Sammelleitung 12 und gegebenenfalls Verluste aufgrund turbulenter Strömung zu berücksichtigen.

Es wird immer ein volles Rohr betrieben.

Da das Tauchrohr immer unter Druck durchströmt wird, ist es an sich unerheblich, ob die Zuflußöffnungen am Rohrscheitel, an der Seitenwand oder an der Rohrsohle angebracht sind.
Durch die oben erwähnte Ausbildung der Zuflußöffnungen am Tauchrohr als Schlitze von mindestens 10 mm Breite, ist es durch Veränderungen der Schlitzlänge möglich, eine Anpassung an die hydraulischen Randbedingungen herbeizuführen.

Für den Zufluß aus dem Becken in das Tauchrohr ist dies der Unterschied zwischen dem Druck außerhalb des Rohres, der bei konstantem Wasserspiegel gleich ist und dem Rohrinnendruck, der vom örtlich veränderlichen Zufluß im Tauchrohr abhängt.

Nach Obigem wird das Tauchrohr selbst über die Ablaufleitung mit dem Ablaufschacht verbunden. Insbesondere bei Rundbecken mit Durchmessern von mehr als 50 Metern, ist gegebenenfalls eine zweite Ringleitung näher zur Beckenmitte vorzusehen. Die Ablaufleitung dieser zweiten Ringleitung mündet dann ebenfalls im Ablaufschacht. In Abwandlung der oben beschriebenen Maßnahme ist es schließlich möglich, die Vorrichtung ebenfalls zur Entnahme aus Rechteckbecken zu verwenden.

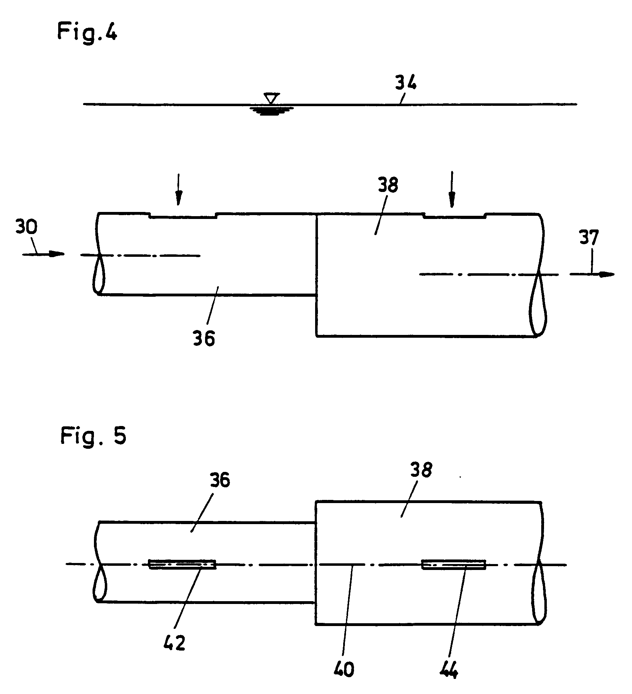

Die Figuren 4 und 5 zeigen ein Tauchrohr, einmal in der Ansicht (Fig. 4), einmal in der Draufsicht (Fig. 5).

Das Tauchrohr ist von der Anströmseite zur Abströmseite gegen zunehmende Querschnitte gestuft, wobei das Rohr oben bündig, unten gestuft verläuft, wie aus den Figuren 4 und 5 ersichtlich. Die Strömung erfolgt von links 30 nach rechts 32, das Tauchrohr ist natürlich bei dieser Ausführungsform ebenfalls immer unterhalb des Wasserspiegels 34 angeordnet. Die Querschnitte sind auf dem Zufluß abgestimmt, also bei 36 ein kleinerer Querschnitt, bei 38 ist ja bereits mehr Wasser zugeströmt, der größere Querschnitt. In der Draufsicht sieht man, daß die Rohrabschnitte zueinander symmetrisch bezüglich der Mittelachse 40 angeordnet sind. Dagegen werden bei dieser Ausführungsform die Schlitze 42, 44 zum Auslauf hin kleiner, d.h. L1 --> L2. Hierdurch wird die Strömung vergleichmäßigt. Es wird erreicht, daß beispielsweise eine maximale Strömungsgeschwindigkeit von 0,3 m/sec. eingehalten werden kann.

Zur Unterstützung einer gleichmäßigen Abzugsgeschwindigkeit über den Verlauf des Tauchrohres ist also die Schlitzlänge von der dem Austritt gegenüberliegenden Stelle bis zum Austritt veränderbar, wie auch deutlich, zumindest die Figuren 4 und 5, aus sich heraus erkennbar machen.

## Patentansprüche

1. Vorrichtung zur über den Beckenumfang gleichmäßig verteilten Entnahme von geklärtem Abwasser aus Rundbecken, die über eine zentrische Einleitung des Abwassers verfügen, mit einem mit Durchbrechungen versehenen Rohr, **dadurch gekennzeichnet,** daß das Tauchrohr als zur Vertikalachse des Rundbeckens konzentrisch angeordnete geschlossene Ringleitung ausgebildet ist, deren Zulauföffnungen als Schlitze ausgebildet sind, wobei die Größe der einzelnen Schlitze unterschiedlich ist.

2. Vorrichtung nach Anspruch 1, gekennzeichnet durch eine höhenverstellbare Ablaufeinrichtung im Ablaufrohr oder eine dort angeordnete schwimmergesteuerte Drosselklappe oder dergleichen Regelorgan.

3. Vorrichtung nach Anspruch 2, dadurch gekennzeichnet, daß mit dem Schwimmer der Beckenwasserspiegel abgreifbar ist.

4. Vorrichtung nach Anspruch 1, dadurch gekennzeichnet, daß die Ringleitung mit dem außerhalb des Rundbeckens angeordneten Ablaufschacht über eine Austrittssammelleitung (16) verbunden ist.

5. Vorrichtung nach Anspruch 4, dadurch gekennzeichnet, daß die Ringleitung äquidistant zum zentrischen Zulauf und äquidistant zum Beckeninnenumfang angeordnet ist.

6. Vorrichtung nach einem der Ansprüche 4 und 5, dadurch gekennzeichnet, daß nur eine einzige Austrittssammelleitung vorgesehen ist.

7. Vorrichtung nach einem der Ansprüche 4 bis 6, dadurch gekennzeichnet, daß die Austrittssammelleitung durch die Beckenwandung geführt ist.

8. Vorrichtung nach einem der vorhergehenden Ansprüche, gekennzeichnet durch eine Ausbildung derart, daß die Überstauung über dem Tauchrohr unabhängig von der Abflußmenge regelbar ist.

9. Vorrichtung nach einem der vorhergehenden Ansprüche, dadurch gekennzeichnet, daß das Rundbecken ein Pufferbecken ist.

10. Vorrichtung nach einem der vorhergehenden Ansprüche, dadurch gekennzeichnet, daß das Tauchrohr unter Druck durchströmt wird, derart, daß die Anbringung der Zuflußöffnungen am Tauchrohr unkritisch ist.

11. Vorrichtung nach einem der vorhergehenden Ansprüche, dadurch gekennzeichnet, daß insbesondere bei Rundbecken mit Durchmessern von mehr als 50 Metern, gegebenenfalls eine zweite Ringleitung näher zur Beckenmitte vorgesehen ist, wobei die Ablaufleitung dieser zweiten Ringleitung ebenfalls im gleichen einzigen Ablaufschacht mündet.

12. Vorrichtung zur über den Beckenumfang gleichmäßig verteilten Entnahme von geklärtem Abwasser aus Rundbecken, die über eine zentrische Einleitung des Abwassers verfügt, mit einem mit Durchbrechungen versehenen Rohr, **dadurch gekennzeichnet,** daß das Tauchrohr als zur Vertikalachse des Rundbeckens konzentrisch angeordnete geschlossene Ringleitung derart ausgebildet ist, daß die Strömungsgeschwindigkeit über die Erstreckung des Tauchrohres im Becken bis zum Austritt aus dem Tauchrohr im wesentlichen konstant gehalten wird.

13. Vorrichtung nach Anspruch 12, **dadurch gekennzeichnet,** daß zur Unterstützung einer gleichmäßigen Abzugsgeschwindigkeit über den Verlauf des Tauchrohres die Schlitzgröße von der dem Austritt gegenüberliegenden Stelle bis zum Austritt unterschiedlich ist.

14. Vorrichtung nach Anspruch 13, **dadurch gekennzeichnet,** daß die Größe der Schlitze (42, 44) zur Austrittssammelleitung hin abnimmt.

15. Vorrichtung nach einem der vorhergehenden Ansprüche, da durch gekennzeichnet, daß das Tauchrohr zum Austritt hin zunehmenden Querschnitt beginnend von der der Austrittssammelleitung gegenüberliegenden Stelle hat.

16. Vorrichtung nach Anspruch 15, dadurch gekennzeichnet, daß das Tauchrohr sich allmählich bzw. gestuft (36; 38)aufweitet.

17. Vorrichtung nach einem der vorhergehenden Ansprüche, dadurch gekennzeichnet, daß das Tauchrohr auf eine maximale Austrittsgeschwindigkeit und eine ebensolche in jedem Rohrabschnitt (z.B. 36; 38) durch Kombination von zum Austritt hin kleiner werdenden Schlitzen (42; 44) und sich aufweitendem Rohrdurchmesser zur Verbesserung in der Gleichförmigkeit der Anströmung des Tauchrohrs ausgelegt ist.

18. Vorrichtung nach einem der Ansprüche 16 und 17, dadurch gekennzeichnet, daß die abgestuften Rohrsegmente (36; 38) oben bündig, unten gestuft ausgebildet sind.

## Claims

1. An apparatus for the withdrawal of clarified waste water from circular basins the withdrawal being uniformly approportionend over the circumference of the basins which basins have a central waste water inlet, the apparatus comprising a pipe provided with openings, **characterized in that** the submerged pipe is constructed as a closed ring conduit arranged concentrically with a vertical axis of the circular basin and whose inlet openings are in the form of slots, the magnitudes of the individual slots being variable.

2. The apparatus as claimed in claim 1, **characterized** by an out-flow means in the drainage pipe being adjustable in height or characterized by a float-controlled throttle valve arranged there or by any similar control element.

3. The apparatus as claimed in claim 2, **characterized in that** the basin water level can be sensed with the float.

4. The apparatus as claimed in claim 1, **characterized in that** the ring conduit is connected by means of an efflux collecting conduit (16) to a drainage duct arranged outside the circular basin.

5. The apparatus as claimed in claim 4, **characterized in that** the ring conduit is arranged equidistantly from the central inlet and equidistantly from the internal circumference of the basin.

6. The apparatus as claimed in either of claims 4 or 5, **characterized in that** only a single efflux collecting conduit is provided.

7. The apparatus as claimed in any of claims 4 to 6, **characterized in that** the efflux collecting conduit is routed through the basin wall.

8. The apparatus as claimed in any of the preceding claims, **characterized in that** the construction is such that the flooding above the submerged pipe can be regulated independently of the amount drained.

9. The apparatus as claimed in any of the preceding claims, **characterized in that** the circular basin is a buffer tank.

10. The apparatus as claimed in any of the preceding claims, **characterized in that** the flow through the submerged pipe takes place under pressure in such a way that the provision of the inlet openings in the submerged pipe is not critical.

11. The apparatus as claimed in any of the preceding claims, **characterized** in that in the case of circular basins having diameters of more than 50 meters in particular, a second ring conduit is possibly provided nearer the center of the basin, the drainage conduit of said second ring conduit also discharging into the same single drainage duct.

12. An apparatus for the withdrawal of clarified waste water from circular basins the withdrawal being uniformly approportioned over the circumference of circular basins which basins have a central waste water inlet, comprising a pipe provided with openings, **characterized in that** the submerged pipe is in the form of a closed annular conduit arranged concentrically with the vertical axis of the circular basin in such way that the flow velocity over the extension of the submerged pipe in the basin up to the outlet from the submerged pipe is kept essentially constant.

13. The apparatus as claimed in claim 12, **characterized in that** to promote a uniform take-off velocity over the extension of the submerged pipe, the slot length is constructed variably in an adapted manner from the point situated opposite the outlet up to the outlet.

14. The apparatus as claimed in claim 13, characterised in that the size of the slots (42, 44) decreases towards the efflux collecting conduit.

15. The apparatus as claimed in any of the preceding claims, **characterized in that** the submerged pipe has a cross section which increases toward the outlet, starting from the point situated opposite the efflux collecting conduit.

16. The apparatus as claimed in claim 15, **characterized in that** the submerged pipe widens gradually or in a stepped manner (36; 38).

17. The apparatus as claimed in one of the preceding claims, **characterized in that** the submerged pipe is designed for a maximum outlet velocity and also the same in every section (for example 36; 38) of the pipe by a combination of slots (42; 44) which become smaller towards the outlet and by pipe diameters which widen, in order to improve the uniformity of the flow against the submerged pipe.

18. The apparatus as claimed in any of claims 16 or 17, **characterized in that** the graded pipe segments (36; 38) are constructed so as to be flush at the top and stepped at the bottom.

## Revendications

1. Dispositif pour prélever, d'une manière uniformément répartie sur la périphérie du bassin, des eaux résiduaires clarifiées à partir de bassins circulaires, qui disposent d'un point d'émergence central des eaux résiduaires, et comportant un tube pourvu de perforations, caractérisé en ce que le tube plongeur est conçu comme une conduite annulaire, fermée, disposée concentriquement par rapport à l'axe vertical du bassin circulaire, conduite annulaire dont les ouvertures d'arrivée sont conçues comme des fentes, chacune des fentes ayant une taille différente.

2. Dispositif selon la revendication 1, caractérisé par un dispositif d'évacuation réglable en hauteur dans le tube d'évacuation, ou encore par une soupape d'étranglement, qui y est disposée en étant commandée par un flotteur, ou un organe de régulation analogue.

3. Dispositif selon la revendication 2, caractérisé en ce que le flotteur permet de détecter le niveau de l'eau dans le bassin.

4. Dispositif selon la revendication 1, caractérisé en ce que la conduite annulaire communique par l'intermédiaire d'un collecteur de sortie (16) avec le puits d'évacuation disposé à l'extérieur du bassin circulaire.

5. Dispositif selon la revendication 4, caractérisé en ce que la conduite annulaire est disposée à une distance égale du point d'entrée central et de la périphérie intérieure du bassin.

6. Dispositif selon l'une des revendications 4 et 5, caractérisé en ce qu'on ne prévoit qu'un seul collecteur de sortie.

7. Dispositif selon l'une des revendications 4 à 6, caractérisé en ce que le collecteur de sortie est guidé par la paroi du bassin.

8. Dispositif selon l'une des revendications précédentes, caractérisé par une configuration telle que la submersion, au-dessus du tube plongeur, est réglable indépendamment du débit d'évacuation.

9. Dispositif selon l'une des revendications précédentes, caractérisé en ce que le bassin circulaire est un bassin tampon.

10. Dispositif selon l'une des revendications précédentes, caractérisé en ce que le tube plongeur est traversé par un écoulement sous pression de telle sorte que la mise en place des orifices d'arrivée dans le tube plongeur ne présente aucun caractère critique.

11. Dispositif selon l'une des revendications précédentes, caractérisé en ce qu'on prévoit, en particulier dans le cas des bassins circulaires ayant un diamètre supérieur à 50 m, éventuellement une deuxième conduite annulaire plus proche du milieu du bassin, la conduite d'évacuation de cette deuxième conduite annulaire débouchant elle aussi dans le même puits d'évacuation unique.

12. Dispositif pour prélever, d'une manière uniformément répartie sur la périphérie du bassin, des eaux résiduaires clarifiées à partir de bassins circulaires, dispositif comportant un orifice central d'émergence des eaux résiduaires, et comportant un tube pourvu de perforations, caractérisé en ce que le tube plongeur est conçu comme une conduite annulaire fermée, disposée d'une manière concentrique par rapport à l'axe vertical du bassin circulaire, de façon que la vitesse d'écoulement, sur toute la longueur du tube plongeur dans le bassin, soit maintenue essentiellement constante jusqu'au point de sortie à partir du tube plongeur.

13. Dispositif selon la revendication 12, caractérisé en ce que, pour favoriser une vitesse uniforme de soutirage sur toute la longueur du tube plongeur, la taille des fentes varie entre le point opposé à la sortie et la sortie proprement dite.

14. Dispositif selon la revendication 13, caractérisé en ce que la taille des fentes (42, 44) diminue vers le collecteur de sortie.

15. Dispositif selon l'une des revendications précédentes, caractérisé en ce que le tube plongeur a en allant vers la sortie une section transversale croissante, qui part du point opposé au collecteur de sortie.

16. Dispositif selon la revendication 15, caractérisé en ce que le tube plongeur s'évase d'une manière progressive ou étagée (36 ; 38).

17. Dispositif selon l'une des revendications précédentes, caractérisé en ce que le tube plongeur est conçu pour une vitesse maximale de sortie et une vitesse de sortie identique dans chaque tronçon de tube (par exemple (36 ; 38), grâce à une combinaison de fentes (42 ; 44), qui diminuent dans la direction de la sortie, et d'un diamètre croissant du tube, et ce pour améliorer l'uniformité du débit arrivant dans le tube plongeur.

18. Dispositif selon l'une des revendications 16 et 17, caractérisé en ce que les segments de tube étagés (36 ; 38) sont en alignement à leur partie supérieure et en étagement à leur partie inférieure.
